# EUROPÄISCHE PATENTSCHRIFT

(11) **EP 2 190 702 B1**
(45) Veröffentlichungstag und Bekanntmachung des Hinweises auf die Patenterteilung: **30.09.2015**
(21) Anmeldenummer: 08786123.3
(22) Anmeldetag: 14.07.2008
(51) Int. Cl.: B60S 1/04, F16F 15/08

(54) **DÄMPFUNGSELEMENT**
DAMPING ELEMENT
ELEMENT D'AMORTISSEMENT

(30) Priorität: 11.09.2007 DE 102007043249
(43) Veröffentlichungstag der Anmeldung: 02.06.2010
(73) Patentinhaber: Robert Bosch GmbH, 70442 Stuttgart (DE)
(72) Erfinder: REITH, Michael, 77815 Buehl-Vimbuch (DE); ALBRECHT, Gerard, F-67690 Hatten (FR)
(86) Internationale Anmeldenummer: PCT/EP2008/059166
(87) Internationale Veröffentlichungsnummer: WO 2009/033852

(56) Entgegenhaltungen:
- WO-A-2005/097564
- WO-A-2005/097565
- DE-A1-102005 048 341

## Beschreibung

### Stand der Technik

Die Erfindung geht von einem Dämpfungselement nach dem Oberbegriff des Anspruchs 1 aus.

Aus der WO 2005/097564 A1 ist ein gattungsgemäßes Dämpfungselement bekannt. Es dient zum Befestigen eines Bauteils oder einer Baugruppe, z.B. eines Antriebselements für einen Scheibenwischer, der einen Elektromotor und ein Getriebe umfasst. Das Dämpfungselement ist mit einem Befestigungselement des Bauteils fest verbunden und besitzt etwa mittig einen Schlitz, in den ein Gleitblech eingesetzt ist. Das Gleitblech selbst besitzt zwei annähernd parallel zueinander verlaufende Schenkel, die zwischen sich einen Spalt bilden und an einem im Dämpfungselement liegenden Ende miteinander verbunden sind. Zum anderen Ende hin ist der Spalt offen, sodass das Gleitblech mit dem Dämpfungselement über ein Karosserieblech einer Fahrzeugkarosserie geschoben werden kann. Dies kann von einem Rand des Karosserieblechs oder von einer Öffnung in dem Karosserieblech geschehen, indem der Spalt des Gleitblechs über das Karosserieblech geschoben wird. Zum Spalt hin besitzt das Gleitblech Rastelemente, die in Aussparungen des Karosserieblechs eingreifen, und somit das Dämpfungselement und das Bauteil an der Karosserie in der Montageposition fixieren.

### Offenbarung der Erfindung

Nach der Erfindung besitzt das Gleichblech in mindestens einem seiner Schenkel mindestens eine zum Spalt führende Öffnung, durch die ein Vorsprung des Dämpfungselements in den Spalt ragt. Nach der Montage liegt der Vorsprung des Dämpfungselements mit seiner Stirnfläche an einer Oberfläche eines Karosserieblechs an. Dadurch wird ein Reibkontakt zwischen dem Karosserieblech und dem Vorsprung gebildet, welcher die radiale Bewegung des angebrachten Bauteils, z.B. eines Wischermotors, verhindert oder zumindest stark dämpft. Dabei ist es zweckmäßig, dass der Vorsprung im montierten Zustand unter einer bestimmten Vorspannung an dem Karosserieblech anliegt. Durch die Vorspannung kann der Grad der Dämpfung bestimmt werden. Eine geringere Vorspannung bedeutet eine geringere Dämpfung, aber auch eine leichtere Montage.

Der Querschnitt der Öffnung, der dem Querschnitt des Vorsprungs angepasst ist, kann unterschiedliche Formen haben, z.B. kreisförmig, oval oder polygonal. Im letzten Fall ist es zweckmäßig, die Ecken des Polygons abzurunden. Durch die Wahl der Querschnittsform und ihre Lage relativ zur Belastungsrichtung kann erreicht werden, dass der Vorsprung der Belastung einen unterschiedlichen Widerstand entgegensetzt, so sind z.B. bei einem kreisförmigen Querschnitt die Widerstände in allen Richtungen gleich, während bei einem ovalen oder polygonalen Querschnitt der Widerstand in Richtung der längsten Erstreckung der Querschnittsfläche größer ist als in einer Richtung quer dazu.

Ferner ist es zweckmäßig, dass sich der Vorsprung im Bereich einer Rastnase befindet, die in einen der Schenkel eingeprägt ist und in den Spalt ragt. Im montierten Zustand greift sie in eine Rastöffnung des Karosserieblechs ein, während sie vor dem Einrasten die Schenkel des Gleitblechs spreizt, sodass der Vorsprung während der Montage nicht am Karosserieblech anliegt. Dadurch wird zum einen die Montage erleichtert und zum anderen der Vorsprung gegen Beschädigungen geschützt.

Zweckmäßigerweise besitzt die Rastnase zum geschlossenen Ende des Gleitblechs hin eine steile Flanke, während sich zum offenen Ende hin eine Montageschräge anschließt. Diese bewirkt ein sanftes Gleiten des Karosserieblechs in den Spalt des Gleichblechs. Ferner wird die Montage dadurch erleichtert, dass die Schenkel des Gleitblechs an dem offenen Ende des Spalts divergieren und in Flansche übergehen, die in etwa senkrecht zum Spalt verlaufen.

Das Gleitblech kann mit geeigneten Mitteln im Dämpfungselement gehalten werden, z.B. durch Einkleben, Vulkanisieren, Einspritzen oder durch Hinterschneidungen, die am geschlossenen Ende des Schlitzes vorgesehen sind, und in die das entsprechend angepasste Ende des Gleitblechs eingreift. Zum Befestigen des Bauteils bzw. der Baugruppe am Dämpfungselement ist es zweckmäßig, dass an den Stirnseiten des Gleitblechs Halter angebracht sind.

### Kurze Beschreibung der Zeichnungen

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Schnitt durch ein erfindungsgemäßes Dämpfungselement entsprechend der Linie I-I in Fig. 2,
- Fig. 2: eine Ansicht eines am Fahrzeug montierten Dämpfungselements,
- Fig. 3: einen Teilschnitt entsprechend der Linie I-I in Fig. 2 während der Montage
- Fig. 4: bis Fig. 8 Beispiele für die Ausgestaltung eines Querschnitts eines Vorsprungs nach Fig. 2.

### Ausführungsformen der Erfindung

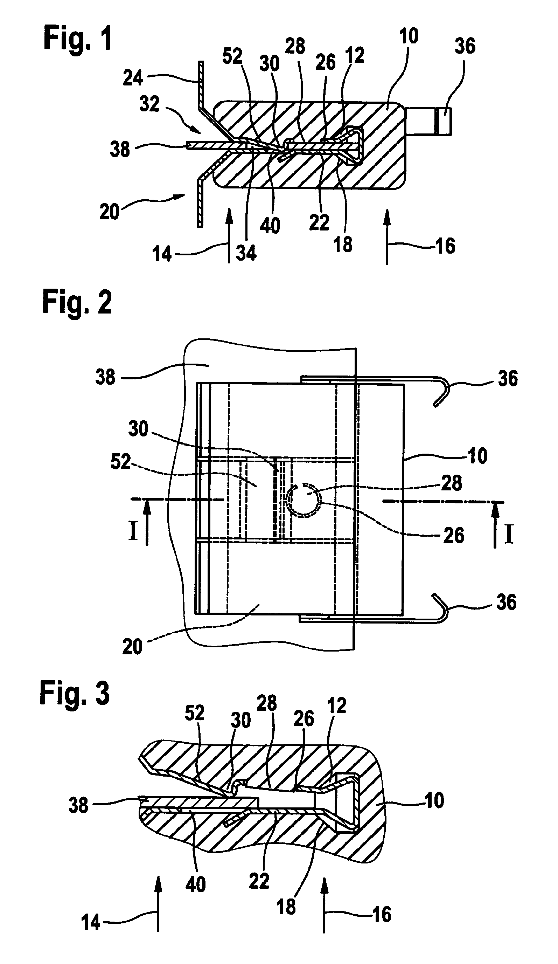

Mit 10 ist ein Dämpfungselement bezeichnet, das etwa in der Mitte einen Schlitz 12 aufweist, der zum einen Ende 14 offen und zum andren Ende 16 hin geschlossen ist. In den Schlitz 12 ist ein Gleitblech 20 eingesetzt, das zwei im Wesentlichen parallel zueinander verlaufende Schenkel 22 besitzt. Diese sind an dem geschlossenen Ende 16 miteinander verbunden und bilden an diesem Ende 16 eine Erweiterung, die einer Hinterschneidung 18 des Schlitzes 12 angepasst ist. Im Bereich des offenen Endes 14 divergiert der Spalt 32, um die Montage zu erleichtern, wobei die Schenkel 22 im Endbereich in Flansche 24 übergehen, die etwa senkrecht zum Spalt 32 verlaufen. Mindestens in einem der Schenkel 22 des Gleitblechs 20 ist eine Öffnung 26 vorgesehen, durch die ein Vorsprung 28 in den Spalt 32 ragt. Der Vorsprung 28 ist im Querschnitt der Öffnung 26 angepasst und liegt im montierten Zustand (Fig. 1) mit seiner Stirnfläche an einer Oberfläche eines Karosserieblechs 38 an. In dem angrenzenden Bereich der Öffnung 26 ist in den Schenkel 22 als Rastelement eine Rastnase 30 eingeprägt, die in eine Rastöffnung 34 des Karosserieblechs 38 eingreift und das Dämpfungselement 10 relativ zum Karosserieblech 38 fixiert. Zum offenen Ende 14 des Spalts 32 schließt sich an die Rastnase 30 eine Montageschräge 52 an. Diese erleichtert das Einführen des Karosserieblechs 38 in den Spalt 32 (Fig. 3). Ferner divergieren die Schenkel 22 des Gleitblechs 20 zum offenen Ende 14 hin und gehen dann in etwa senkrecht zum Spalt 32 verlaufende Flansche 24 über.

Bei der Montage (Fig. 3) wird das Dämpfungselement 10 mit dem Spalt 32 des Gleitblechs 20 auf das Karosserieblech 38 geschoben, wobei es die Schenkel 22 aufgrund der Montageschräge 52 und der Rastnase 30 auseinander drückt, sodass die Stirnfläche des Vorsprungs 28 des Dämpfungselements 10 nicht an die Oberfläche des Karosserieblechs 38 gelangt. Dadurch kann das Dämpfungselement 10 ohne großen Widerstand auf das Karosserieblech 38 geschoben werden, bis es seine Endposition erreicht hat, in der das geschlossene Ende 16 des Gleitblechs 20 an der zugewandten Stirnseite des Karosserieblechs 38 anliegt und die Rastnase 30 in die Rastöffnung 34 des Karosserieblechs 38 einrastet. Mit dem Einrasten gelangt die Stirnfläche des Vorsprungs 28 in Reibkontakt mit dem Karosserieblech 38. Zweckmäßigerweise ist in dem der Rastnase 30 gegenüberliegenden Schenkel 22 eine Rastöffnung 40 ausgeklinkt, in die die Rastnase 30 reicht. Zum Verbinden des Dämpfungselements mit einem zugehörigen Bauteil z.B. einem Wischermotor mit Getriebe, dienen Halter 36, die an den Seiten des Gleitblechs 20 angeformt sind.

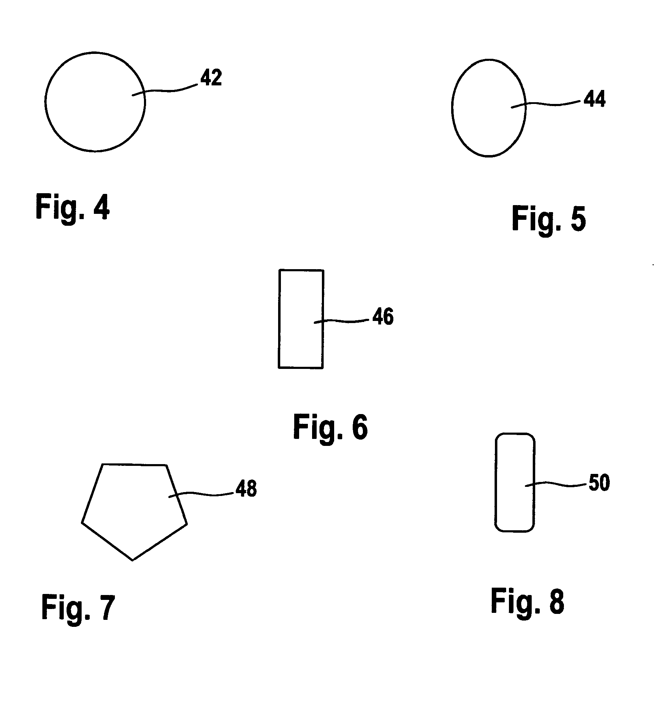

Im montierten Zustand liegt die Stirnfläche des Vorsprungs 28 an der Oberfläche des Karosserieblechs 38 unter einer Vorspannung an. Dadurch wird ein Reibkontakt zwischen dem Vorsprung und dem Karosserieblech 38 gebildet, welche eine Bewegung zwischen dem Dämpfungselement 10 mit dem angekoppelten Bauteil verhindert oder stark dämpft. Durch die Größe der Vorspannung und die Größe des Querschnitts sowie der Querschnittsform des Vorsprungs 28 und seiner Anzahl können die Dämpfungseigenschaften des Reibkontakts zwischen dem Karosserieblech 38 und dem Dämpfungselement 10 bestimmt werden. Hierbei können in einem der Schenkel 22 oder auf beide Schenkel 22 verteilt mehrere Vorsprünge 28 angeordnet werden. In den Fig. 4 bis 8 sind verschiedene Ausführungsvarianten von Querschnitten für den Vorsprung 28 dargestellt. Der Querschnitt 42 hat eine Kreisform, die einer Belastung in allen Richtungen den gleichen Widerstand entgegensetzt. Demgegenüber besitzt die ovale Querschnittsform 44 in Richtung ihrer längsten Erstreckung einen größeren Widerstand gegenüber einer Richtung quer dazu. Ähnlich verhalten sich die polygonalen Beispiele in Rechteckformen 46 ohne abgerundete Ecken oder 50 mit abgerundeten Ecken, während die fünfeckige polygonale Querschnittsform 48 weniger differenzierte Unterschiede zwischen den einzelnen Belastungsrichtungen aufweist. Die unterschiedlichen Vorsprünge 28 können nun so angeordnet werden, dass sie den erwarteten größten Belastungsrichtungen ihre größten Widerstände entgegensetzen.

## Patentansprüche

1. Dämpfungselement (10) mit einem Gleitblech (20), das in einen Schlitz (12) des Dämpfungselements (10) eingesetzt und mit diesem fest verbunden ist sowie zwei im Wesentlichen parallel zueinander verlaufende Schenkel (22) aufweist, die an einem im Dämpfungselement (10) liegenden Ende (16) miteinander verbunden sind und zwischen sich einen Spalt (32) bilden, der zum gegenüberliegenden Ende (14) offen ist, **dadurch gekennzeichnet, dass** das Gleitblech (20) in mindestens einem seiner Schenkel (22) mindestens eine zum Spalt (32) führende Öffnung (26) besitzt, durch die ein Vorsprung (28) des Dämpfungselements (10) in den Spalt (32) ragt.

2. Dämpfungselement (10) nach Anspruch 1, **dadurch gekennzeichnet, dass** der Querschnitt der Öffnung (26) und des Vorsprungs (28) kreisförmig oder oval ist.

3. Dämpfungselement (10) nach Anspruch 1, **dadurch gekennzeichnet, dass** der Querschnitt der Öffnung (26) und des Vorsprungs (28) polygonal ist.

4. Dämpfungselement (10) nach einem der vorhergehenden Ansprüche, **dadurch gekennzeichnet, dass** der Vorsprung (28) in montierten Zustand unter einer Vorspannung an einem Karosserieblech (38) anliegt.

5. Dämpfungselement (10) nach einem der vorhergehenden Ansprüche, **dadurch gekennzeichnet, dass** die längste Erstreckung des Querschnitts des Vorsprungs (28) in der Richtung der größten zu erwartenden Belastungen liegt.

6. Dämpfungselement (10) nach einem der vorhergehenden Ansprüche, **dadurch gekennzeichnet, dass** in einem der Schenkel (22) eine in den Spalt (32) ragende Rastnase (30) eingeprägt ist, die im montierten Zustand in eine Rastöffnung (34) des Karosserieblechs (38) eingreift.

7. Dämpfungselement (10) nach Anspruch 6, **dadurch gekennzeichnet, dass** die Rastnase (30) zum geschlossenen Ende (16) des Gleitblechs (20) eine steile Flanke aufweist, während sich zum offenen Ende (14) hin eine Montageschräge (52) anschließt.

8. Dämpfungselement (10) nach einem der vorhergehenden Ansprüche, **dadurch gekennzeichnet, dass** die Schenkel (22) des Gleitblechs (20) an dem offenen Ende (14) des Spalts (32) divergieren und in etwa senkrecht zum Spalt (32) verlaufende Flansche (24) übergehen.

9. Dämpfungselement (10) nach Anspruch 8, **dadurch gekennzeichnet, dass** der Schlitz (12) an seinem geschlossenen Ende eine Hinterschneidung (18) bildet, in die das entsprechend angepasste Ende (18) des Gleitblechs (12) eingreift.

10. Dämpfungselement (10) nach Anspruch 8, **dadurch gekennzeichnet, dass** stirnseitig an den Schenkeln (22) des Gleitblechs (20) Halter (24) angebracht sind.

## Claims

1. Damping element (10) having a sliding plate (20) which is inserted into a slot (12) of the damping element (10), is connected fixedly to the latter and has two limbs (22) which run substantially parallel to one another, are connected to one another at an end (16) which lies in the damping element (10), and form a gap (32) between them, which gap (32) is open towards the opposite end (14), **characterized in that**, in at least one of its limbs (22), the sliding plate (20) has at least one opening (26) which leads to the gap (32) and through which a projection (28) of the damping element (10) protrudes into the gap (32).

2. Damping element (10) according to Claim 1, **characterized in that** the cross section of the opening (26) and of the projection (28) is circular or oval.

3. Damping element (10) according to Claim 1, **characterized in that** the cross section of the opening (26) and of the projection (28) is polygonal.

4. Damping element (10) according to one of the preceding claims, **characterized in that** the projection (28) bears against a vehicle body plate (38) under a prestress in the mounted state.

5. Damping element (10) according to one of the preceding claims, **characterized in that** the longest extent of the cross section of the projection (28) lies in the direction of the greatest loads to be expected.

6. Damping element (10) according to one of the preceding claims, **characterized in that** a latching lug (30) which protrudes into the gap (32) is stamped into one of the limbs (22), which latching lug (30) engages into a latching opening (34) of the vehicle body plate (38) in the mounted state.

7. Damping element (10) according to Claim 6, **characterized in that** the latching lug (30) has a steep flank towards the closed end (16) of the sliding plate (20), whereas a mounting bevel (52) adjoins towards the open end (14).

8. Damping element (10) according to one of the preceding claims, **characterized in that** the limbs (22) of the sliding plate (20) diverge at the open end (14) of the gap (32) and merge into flanges (24) which run approximately perpendicularly with respect to the gap (32).

9. Damping element (10) according to Claim 8, **characterized in that** the slot (12) forms an undercut (18) at its closed end, into which undercut (18) the correspondingly adapted end (18) of the sliding plate (20) engages.

10. Damping element (10) according to Claim 8, **characterized in that** holders (24) are attached to the limbs (22) of the sliding plate (20) on the end side.

## Revendications

1. Elément d'amortissement (10) avec une tôle de glissement (20), qui est introduite dans une fente (12) de l'élément d'amortissement (10) et est solidement assemblée à celui-ci et qui présente deux branches (22) essentiellement parallèles l'une à l'autre, qui sont reliées l'une à l'autre à une extrémité (16) située dans l'élément d'amortissement (10) et qui forment entre elles une fente (32), qui est ouverte vers l'extrémité opposée (14), **caractérisé en ce que** la tôle de glissement (20) comporte dans au moins une de ses branches (22) au moins une ouverture (26) menant à la fente (32), à travers laquelle une saillie (28) de l'élément d'amortissement (10) pénètre dans la fente (32).

2. Elément d'amortissement (10) selon la revendication 1, **caractérisé en ce que** la section transversale de l'ouverture (26) et de la saillie (28) est circulaire ou ovale.

3. Elément d'amortissement (10) selon la revendication 1, **caractérisé en ce que** la section transversale de l'ouverture (26) et de la saillie (28) est polygonale.

4. Elément d'amortissement (10) selon l'une quelconque des revendications précédentes, **caractérisé en ce que** la saillie (28) s'applique à l'état monté avec une précontrainte sur une tôle de carrosserie (38).

5. Elément d'amortissement (10) selon l'une quelconque des revendications précédentes, **caractérisé en ce que** la plus longue extension de la section transversale de la saillie (28) est orientée dans la direction des charges les plus élevées envisagées.

6. Elément d'amortissement (10) selon l'une quelconque des revendications précédentes, **caractérisé en ce qu'**un ergot d'encliquetage (30) sortant dans la fente (32) est estampé dans une des branches (22) et s'engage à l'état monté dans une ouverture d'encliquetage (34) de la tôle de carrosserie (38).

7. Elément d'amortissement (10) selon la revendication 6, **caractérisé en ce que** l'ergot d'encliquetage (30) présente un flanc abrupt vers l'extrémité fermée (16) de la tôle de glissement (20), tandis qu'une rampe de montage (52) se raccorde à l'extrémité ouverte (14).

8. Elément d'amortissement (10) selon l'une quelconque des revendications précédentes, **caractérisé en ce que** les branches (22) de la tôle de glissement (20) divergent à l'extrémité ouverte (14) de la fente (32) et se prolongent dans des flancs (24) s'étendant environ perpendiculairement à la fente (32).

9. Elément d'amortissement (10) selon la revendication 8, **caractérisé en ce que** la fente (12) forme à son extrémité fermée une contre-dépouille (18), dans laquelle l'extrémité adaptée de façon correspondante (18) de la tôle de glissement (20) s'engage.

10. Elément d'amortissement (10) selon la revendication 8, **caractérisé en ce que** des supports (24) sont placés frontalement sur les branches (22) de la tôle de glissement (20).
